(19) Europäisches Patentamt
European Patent Office
Office européen des brevets

(11) **EP 3 868 264 A1**

(12) **EUROPEAN PATENT APPLICATION**

(43) Date of publication:
**25.08.2021 Bulletin 2021/34**

(51) Int Cl.:
**A47J 31/52** *(2006.01)* **A47J 31/44** *(2006.01)*

(21) Application number: **20158978.5**

(22) Date of filing: **24.02.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Riprup Company S.A.**
**GY1 St. Peter Port (GG)**

(72) Inventors:
• **Bissen, Monique**
**75175 Pforzheim (DE)**
• **Schucker, Josef**
**6622 Ronco Sopra Ascona (CH)**

(74) Representative: **Wittmann, Günther**
**Patentanwaltskanzlei Wittmann**
**Frans-Hals-Straße 31**
**81479 München (DE)**

(54) **BEVERAGE DISPENSER WITH REDUCED START-UP TIME**

(57)    The present invention discloses a method of operating a beverage dispenser, comprising the following steps:
- detecting a person approaching the beverage dispenser and/or a person in the proximity of the beverage dispenser; and
- responsive to detecting at least one of the person approaching the beverage dispenser and detecting the person in the proximity of the beverage dispenser, activating at least one of:
- a beverage preparation device of the beverage dispenser; and
- a beverage dispenser cleaning function for cleaning the at least one beverage preparation device.

**Fig. 1**

Printed by Jouve, 75001 PARIS (FR)

## Description

The present invention relates to a beverage dispenser with reduced start-up time that reduces the time span between a request for beverage and dispensing the beverage.

### Field of the Invention

Particularly, the present invention relates to a beverage dispenser for use in households, restaurants, hotels, offices, hospital, nursing points or the like. The beverage dispenser is adapted for dispensing a beverage into a user vessel such as a glass, a cup, a carafe or a portable bottle. Particularly, the present invention relates to a beverage dispenser adapted to dispense beverage by a nozzle for a single person or for small groups of persons into a portable vessel such as a carafe or bottle. Small groups are considered to be formed by 2 to approximately 20 persons. The beverage is output by a nozzle into the user vessel. The raw water is drawn from a tank. The tank may be filled with tap water, for example.

### Prior art

Beverage dispensers are known to persons skilled in the art. In one type of beverage dispensers a small barrel or a bag, both made of plastics, are inserted into an inlet of a beverage dispenser and beverage from the barrel or bag is output by a nozzle. Some beverage dispensers can provide carbonized water upon request or cool the water upon request. Another type of beverage dispenser is connected to a water source such as tap water. The water can be filtered by a sediment filter, an activated carbon filter, an ion exchanger filter, a reverse osmosis filter or the like.

DE 20 2010 006 679 U1 discloses an apparatus for generating mineral water having a filter and at least one mineral container between the filter and the outlet. The apparatus further comprises a controller for controlling the feed of minerals from the at least one mineral container. If the water consumption by the user exceeds a daily limit of the daily water consumption, feeding of minerals is stopped or another specific formulated water is dispensed.

WO 94/06547 A1 discloses a water purification and dispensing apparatus comprising a water inlet for obtaining water from a supply source, a water purification system for removing impurities from the source water and a mineral addition system for adding desired minerals into the purified water

US 5,443,739 discloses a water purification and dispensing apparatus comprising a water inlet for obtaining water from a supply source, a water purification system for removing impurities of the source water and a mineral addition system for adding desired minerals to the purified water.

In practice the above beverage dispenser has to perform preparative operation before dispensing beverage of the user request. Such preparative operation may include a flushing of beverage preparation devices, such as tempering devices, carbonizers or the like for preventing that germs formed during a period of stagnation are dispensed with the beverage. Particularly tempering devices have a comparably long start-up phase. Such preparatory operation causes a long time span between requesting a beverage by a user and dispensing the beverage.

### Summary of the invention

It is an object of the present invention to provide a beverage dispenser having a reduced start-up time for dispensing beverage after a user request.

The object of the present invention is achieved by a method according to claim 1 and a beverage dispenser according to claim 14. The depending claims are directed to particular embodiments.

The present invention discloses a method of operating a beverage dispenser comprising the step of detecting a person approaching the beverage dispenser and/or a person in the proximity of the beverage dispenser. Responsive to detecting the person approaching the beverage dispenser and/or detecting the person in the proximity of the beverage dispenser the method activates a beverage preparation device of the beverage dispenser and/or activates a beverage dispenser cleaning function for cleaning the at least one beverage preparation device. According to the present invention the preparation operation including activating the beverage preparation device and/or activating the beverage dispenser cleaning function, is started before the user selects a beverage. Thereby, the time span between selecting a beverage by the user and outputting the beverage by the beverage dispenser is reduced.

The beverage preparation device may comprise a beverage tempering device for cooling or heating beverage. The beverage preparation device may comprise a beverage carbonization device adapted to carbonize beverage. The beverage preparation device may further include a beverage mineralization device for introducing minerals into the beverage. The beverage preparation device may also include any other type of ingredient dispensing device, such as for dispensing flavoring substances or the like.

The method further comprises the step of outputting beverage into a user vessel after the step of activating the beverage preparation device and/or the beverage dispenser cleaning function.

The method comprises the step of activating an imaging sensor for acquiring images of the environment of the beverage dispenser. The imaging sensor may be a camera. The method may process the images for identifying a person. Identifying a person is particularly useful in home and small office environments. The processing of identifying may include a face recognition, recognition based on walking motion, recognition based on walking movement, recognition based on movement of the thigh and shank or the like.

The method may determine a probability by which a person approaches the beverage dispenser based on the acquired images. The step of determining a probability by which the person approaches the beverage dispenser may comprise the step of estimating the intended trajectory of the person based on the elapsed trajectory assessed by processing a plurality of images acquired by the image sensor. Such method is disclosed inter alia in the publication "The Garden of Forking Paths: Towards Multi-Future Trajectory Prediction" by Junwei Liang, Lu Jiang, Kevin Murphy, Ting Yu and Alexander Hauptmann and in the ICCV paper "PIE: A Large-Scale Dataset and Models for Pedestrian Intention Estimation and Trajectory Prediction" by Amir Rasouli, Iuliia Kotseruba, Toni Kunic and John K. Tsotsos published by the Computer Vision Foundation.

Alternatively or additionally the step of determining the probability by which the person approaches the beverage dispenser may include the step of comparing the elapsed actual trajectory of a person with trajectories of this person stored in a database assessed by processing a plurality of images acquired by the image sensor. The method may use historical data to estimate the probability by which the person will approach the beverage dispenser. For example, if the user moves along a first trajectory the probability that the user may approach the beverage dispenser may be higher as compared, if the user moves along a second trajectory. The method may be a self-learning method storing historical trajectories of a user. Thereby, the method can adapt automatically to the site of installation of the beverage dispenser such as a position in a room and furniture placed in the room. The method may compare the elapsed actual trajectory of a person with trajectory of a plurality of persons stored in the database assessed by processing a plurality of images acquired by the image sensor for determining the probability by which the person approaches the beverage dispenser.

The step of determining a probability by which the person approaches the beverage dispenser may comprise the step of determining the likelihood, whether the user will approach the beverage dispenser at the actual time and/or determining the likelihood, whether the user will approach the beverage dispenser based on the last time the user requested beverage. A user may have preferred beverage dispensing times, such as in the morning or during noon. Further, the user may by habit dispense beverage at a certain time of the day. Further the user may dispense beverage by habit after lapse of a user specific time interval, which may of course vary from day to day.

The step of determining a probability that the person approaches the beverage dispenser may comprise the step of determining, whether the person carries a beverage vessel by processing the plurality of images acquired by the image sensor. If a person carries a beverage vessel, such as a glass, a cup, a bottle, a carafe or the like, the likelihood that the user will dispense beverage from the beverage dispenser is higher compared with a case, in which a user does not carry a beverage vessel.

The method may also comprise the step of proposing the person a beverage after identifying the person by processing the plurality of images acquired by the image sensor.

The proposed beverage may be the last beverage requested by the person, the beverage requested most often by the person, the beverage requested most likely by the person based on the time of the day, the beverage requested most likely by the person based on the season, the beverage requested most likely by the person based on at least one environment value or the like. The environment value may be at least one of the room temperature, outside temperature, humidity in the room in which the beverage dispenser is installed, outside humidity or the like.

As mentioned before, the method according to the present invention may be a self-learning method. The method may store at least one trajectory assessed by processing a plurality of images acquired by the image sensor in a database. The method may store the user specific trajectories and as a result whether the beverage dispenser was approached or not the method may store the trajectories and the result for a plurality of user. The method may store the trajectory and the result individually for each user.

The method may further comprise the step of storing in a database the actual time of a dispensing event and the actual time of a plurality of dispensing events. Thereby, the method may determine the likelihood of a beverage dispensing request based on the time of the day. The method may store in the database the actual time of a dispensing event per user. Thereby, the method may calculate a user specific likelihood for a beverage dispensing request (i.e. beverage dispensing event) based on the time of day. Further the method may determine an average interval between two dispensing events (i.e. dispensing requests) of a person. Further, the method may determine preferred dispensing times of a person. The method may comprise the step of storing image processing information about at least one beverage vessel in a database, wherein the image processing information is generated by analyzing the at least one image acquired by the image sensor. Alternatively or additionally, the method may comprise the step of storing image processing information about at least one beverage vessel of a plurality of users in a database, wherein the image processing information is generated by analyzing at least one image acquired by the image sensor. The image processing information may be a digital model of the user vessel to be used by image processing algorithms for identifying a user vessel. The method may store the model of the beverage vessel user specific.

The invention also discloses a beverage dispenser comprising at least one beverage preparation device. The beverage dispenser comprises a person detection sensor adapted to detect at least one of a person approaching the beverage dispenser and a person in the proximity of the beverage dispenser. The person detection sensor is connected with the controller. If the person detection sensor transmits a signal to the controller indicating that a person is approaching the beverage dispenser and/or indicating a person in the proximity of the beverage dispenser, the controller is adapted to activate the beverage preparation device and/or the beverage dispenser function. The beverage preparation device may be a tempering device, such as a cooler. By activating the tempering device, the tempering device is pre-cooled or preheated such that beverage flowing there through is tempered to the set temperature in a shorter period.

The beverage dispenser may comprise a valve connected downstream of the at least one beverage preparation device. The valve is adapted to pass a liquid from the at least one beverage preparation device in a first operation mode to a nozzle for outputting the beverage to a user vessel and to pass the liquid from the at least one beverage preparation device in a second operation mode to a drain. The first operation mode may be the dispensing mode. The second operation mode may be the beverage dispenser cleaning function in which at least one beverage preparation device is flushed and any beverage stagnating in the beverage preparation devices is flushed to the drain.

**Short description of the drawings**

The present invention is now explained in further detail with reference to the accompanying figures showing non-limiting embodiments of the present invention, wherein:

Fig. 1 shows a schematic diagram of a beverage dispenser;

Fig. 2 shows a first scenario of possible trajectories of a user;

Fig. 3 shows a second scenario of possible trajectories of a user;

Fig. 4 shows the likelihood of a beverage dispensing event depending on the time of the day;

Fig. 5 shows the likelihood of a beverage dispensing event depending on the period passed since the last dispensing event;

Fig. 6 shows the likelihood of a beverage dispensing event depending on an environment value; and

Fig. 7 shows a user interface for proposing the user a beverage.

**Detailed Description of the drawings**

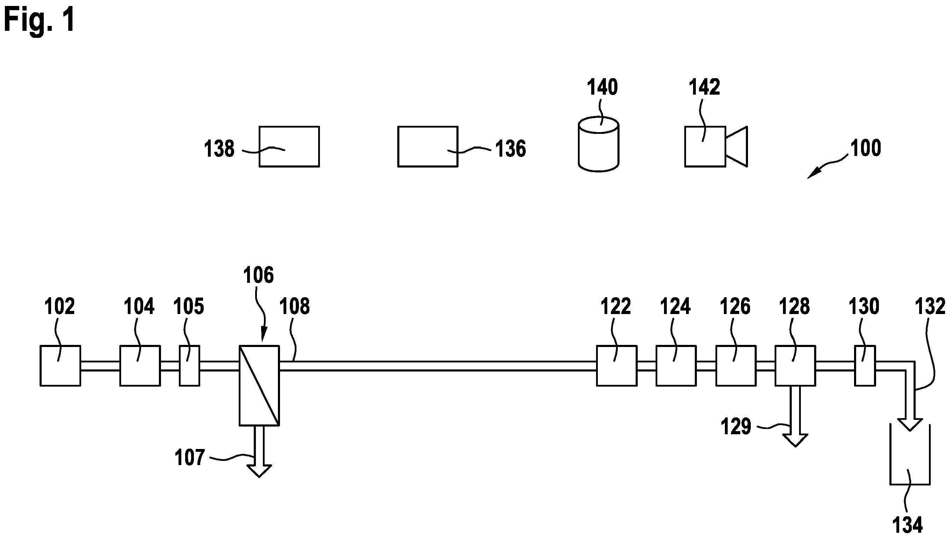

Reference is made to figure 1 showing a beverage dispenser 100 according to the present invention. The water dispenser 100 is connected to a water source 102 that may be tap water or a tank.

The water source 102 is connected by a conduit with a pre-filter 104 which may comprise a sediment filter and/or an activated carbon filter.

The pre-filter 104 is connected to a reverse osmosis filter 106 acting as demineralization device. The water drawn from the water source 102 is pressurized by a pump 105 before entering the reverse osmosis filter. Operation of a reverse osmosis filter 106 is known to the person skilled in the art, and therefore operation of the reverse osmosis filter 106 does not have to be explained in further detail. The concentrate, in which the undesired components, such as minerals, heavy metals or the like are solved, as well as filtered microorganisms are output to a drain 107.

The water (permeate) output by the reverse osmosis filter 106 is fed to a flow-type tempering device 122 forming a beverage preparation device. The flow-type tempering device 122 is tempering the water to a temperature set by a controller 136. The set temperature of the water to be output by the flow-type tempering device 122 is commanded by the controller 136. The water flows from an output of the flow-type tempering device 122 to the input of a flow-type carbonization device 124 adding carbon dioxide to the water as set by a controller 136.

From an output of the flow-type carbonization device 124 forming also a beverage preparation device, the water flows to a flow-type mineralization device 126 also forming a beverage preparation device. The controller 136 controls the mineralization device 126 such that the water output by the flow-type mineralization device comprises the minerals desired by a user. The flow-type mineralization device 126 may comprise a plurality of vessels filled with mineralization fluid, wherein a plurality of micro metering pumps delivers the mineralization fluids in the respective desired quantity into the water flowing through an input of the flow-type mineralization device 126 to an output of the flow-type mineralization device 126. Such flow-type mineralization device is for example disclosed in the European patent application EP18207971.5, which is incorporated herein in its entirety by reference. The water flows from the output of the flow-type mineralization device 126 to an output valve 128 and passes through a retrograde contamination prevention device 130, such as a UV light source, before it is output by a nozzle to a portable user vessel 134. The portable user vessel 134 may be a glass, a cup, a bottle, a carafe or the like. The portable user vessel 134 may be suitable for carrying beverage for a single person or a small group of persons, such as 2 to 20 persons.

All components of conduits the flow-type tempering device 122, the flow-type carbonization device 124, the flow-type mineralization device 126, the output valve 128, the retrograde contamination prevention device 130 and the nozzle 132 are made of metal and/or glass that is biological inert. Also, the output port for permeate of the reverse osmosis filter 106 is made of biological inert material, particularly a biological inert metal. The biological inert metal may comprise stainless steel, VA steel, VA1 steel, VA2 steel, VA3 steel, VA4 steel or the like. A biological inert material is a material that does not serve as nutrition for germs, microorganisms, a biological film, bacteria, virus or the like. Germs cannot form on biological inert metal contrary to plastics. Thereby, germ formation and deposition of biological films are prevented.

In the beverage dispensing operation mode, the controller controls the pump 105 after a request of a user to dispense beverage such that in all beverage preparation devices 122, 124, 126 an equal flow rate is achieved.

The beverage dispenser according to the present invention further comprises an input device 138 such as a touch sensitive screen, by which the user may select the type of beverage and/or parameters of the beverage to be dispensed. The parameters of the beverage to be dispensed may comprise the temperature of the beverage, the carbonization of the beverage, the mineralization of the beverage, any type of flavoring agents or the like. The parameters may be individually selectable by a user or may be determined by predefined recipes or types of beverage displayed on a display.

During a period, in which no beverage is dispensed small volumes of water may stagnate in a water preparation device 122, 124, 126 and in a conduit downstream of the permeate outlet of the reverse osmosis filter 106. In such small volumes of stagnating water germs may form. For avoiding output of stagnating water and potentially germs into the user vessel 134 the controller 136 switches the output valve 128 in a position such that water is output to a drain 129 before outputting water by the nozzle into a user vessel 134 for commencing a beverage dispenser cleaning function. Then, the controller 136 instructs the pump 105 to pump water from the water source 102 through the reverse osmosis filter 106 into the conduit 108 and the beverage preparation devices 122, 124 and 126 to the output valve 128. The output valve 128 passes the permeate to the drain 129, whereby any water stagnating in the beverage preparation devices 122, 124, 126 and the conduit 108 is flushed to the drain 129. By this procedure output of germs into the user vessel 134 may be avoided.

After the beverage dispenser cleaning function and during normal operation the controller 136 switches the output valve 128 such that permeate output by the reverse osmosis filter 106 is passed through the beverage preparation devices 122, 124, 126 through the output valve 128 into the user vessel 134, whereby the beverage selected by the user is output into the user vessel 134. However, the beverage is only output after the beverage preparation devices 122, 124, 126 have been flushed (beverage dispenser cleaning function) by passing permeate from the output of the reverse osmosis filter 106 to the drain 129. Such flushing is time-consuming and increases the period between selection of a beverage by the user at the input device 138 and outputting the beverage into the user vessel 134.

The beverage dispenser 100 further comprises a camera 142 such as a digital camera, a CCD camera or the like acquiring images of the environment around the beverage dispenser 100. The camera 142 is an embodiment of any available person detection sensor that may include ultrasonic sensors, infrared sensors or the like. The camera 142 is connected to the controller 136. An image processing software may be implemented in the camera 142 and/or in the controller 136. As soon as the camera 142 and/or the controller 136 detect that a person is approaching the beverage dispenser 100 and/or is in the proximity of the beverage dispenser 100, the controller 136 commences the beverage dispenser cleaning function discussed above.

Thereby, the start-up time until beverage is output into the user vessel 134 after a selection of a beverage by the user at the input device 138 is reduced.

Further, the controller 136 may activate one of the beverage preparation devices 122, 124, 126, if the camera 142 and/or the controller 136 detect that a person is approaching the beverage dispenser 100 and/or is in the proximity of the beverage dispenser 100. For example, the controller 136 may instruct the flow-type tempering device 122 to cool such that the conduits within the flow-type tempering device 122 are cooled to a lower temperature. Due to the heat capacity of the conduits and other components in the flow-type tempering device 122 a certain amount of thermal inertness is caused. If the conduit and other components within the flow-type tempering device 122 are cooled, before permeate is passed through the flow-type tempering device 122, the period, until cooled beverage may be output into the user vessel 134 after selection of a beverage by a user at the input device 138 is reduced.

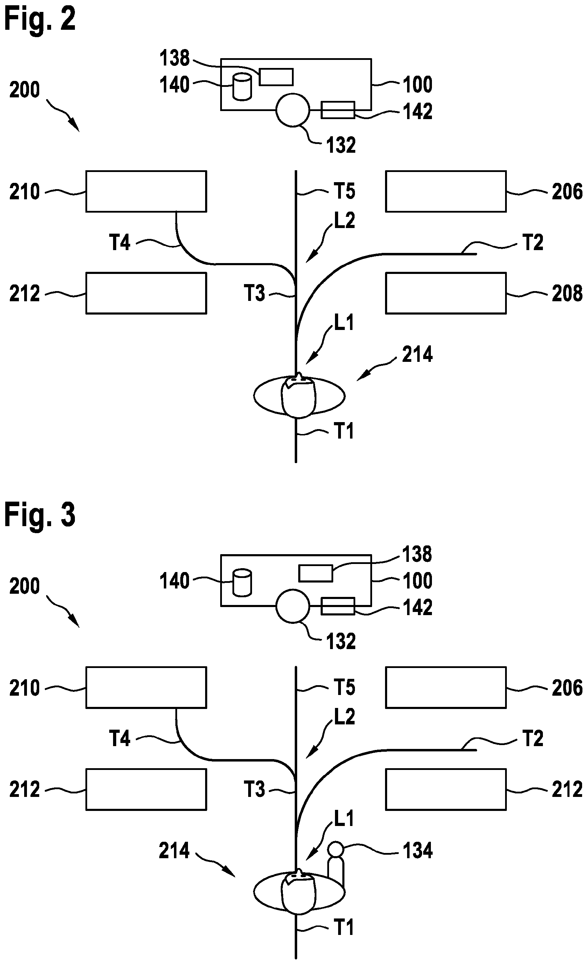

Reference is made to figures 2 and 3, wherein figure 2 shows a first scenario of possible trajectories and/or trajectory segments T1, T2, T3, T4, T5 of a user and figure 3 shows a second scenario of possible trajectories and/or trajectory segments T1, T2, T3, T4, T5 of a user. Based on the elapsed trajectory of a user 214 the camera 142 and/or controller 136 determine, whether a user is approaching the beverage dispenser 100 or not for saving resources, particularly water and energy.

Particularly, the beverage dispenser is installed in a room 200 in which also a first piece of furniture 206, a second piece of furniture 208, a third piece of furniture 210 and a fourth piece of furniture 212 are arranged. The room may be an office or a room of a home. The furniture may be desks, cabinets, tables or the like. Figures 2 and 3 show a first trajectory T1, T2, in which a user passes in a curve between the first and second piece of furniture 206, 208. Particularly, the user 214 first passes in a straight manner T1 and then walks a curve T2, after he has passed the point L1. Figures 2 and 3 show a second trajectory T1, T3 in which the user 214 passes in a straight line between the second and force piece of furniture 208, 212 and turns at the location L2 into a left curve T4 in order to approach the third piece of furniture 210 after the user 214 has passed the second straight trajectory T3 and the second statutory 203.

In another case the user 214 may pass the first straight trajectory T1 and continue on location L1 by the second straight trajectory T3 to the location L2 and continue on the third straight trajectory T5 between the first piece of furniture 206 and the third piece of furniture 210 towards the beverage dispenser 100.

In the case of the scenario of figure 2 the camera 142 and controller 136 of the beverage dispenser may learn during operation of the beverage dispenser 100 the likelihood that a user 214 is approaching the beverage dispenser depending on the trajectory T1, T2, T3, T4, T5 a user 214 walks. This likelihood may be stored in a database 140 (see figure 1) of the beverage dispenser 100. The likelihood may be learned by a neuronal network implemented in the camera 142 and/or the controller 138. The likelihood based on the trajectory may be learned as follows:

$P_{T1}$: 0.1;
$P_{T2}$: 0.01;
$P_{T3}$: 0.8;
$P_{T4}$: 0.01;
$P_{T5}$: 1;

wherein
$P_{T1}$ is the likelihood that the user dispenses beverage, if he walks on trajectory and/or trajectory segment T1;
$P_{T2}$ is the likelihood that the user dispenses beverage, if he walks on trajectory and/or trajectory segment T2;
$P_{T3}$ is the likelihood that the user dispenses beverage, if he walks on trajectory and/or trajectory segment T3;
$P_{T4}$ is the likelihood that the user dispenses beverage, if he walks on trajectory and/or trajectory segment T4;
$P_{T5}$ is the likelihood that the user dispenses beverage, if he walks on trajectory and/or trajectory segment T5;

The above probabilities have been determined for all uses or persons passing along the trajectory T1 and following one of the trajectories T2 to T5. In another embodiment it is possible to recognize the user, such as by face recognition or by recognition of the walking motion of the user, of the walking movement of the user or the like. Accordingly, the camera 142 and/or the controller 136 may determine the likelihood user specific such as follows

$P_{T1U1}$: 0.1;
$P_{T2U1}$: 0.01;
$P_{T3U1}$: 0.8;
$P_{T4U1}$: 0.01;
$P_{T5U1}$: 1;
$P_{T1U2}$: 0.15;
$P_{T2U2}$: 0;
$P_{T3U2}$: 0.9;
$P_{T4U2}$: 0.01;
$P_{T5U2}$: 1;

wherein index Ux indicated the respective likelihood for the user x.

Figure 3 shows a second scenario, in which the user 214 carries a user vessel, such as a glass 134. As soon as the camera 142 recognizes that the user 214 carries a glass 134 there is a higher likelihood that the user will approach the beverage dispenser. Thus, during machine learning the following likelihoods may be learned during machine learning, if any user carries a user vessel in their hand:

$P_{T1U1}$: 0.9;
$P_{T2U1}$: 0.01;
$P_{T3U1}$: 1;

$P_{T4U1}$: 0.1;
$P_{T5U1}$: 1;
$P_{T1U2}$: 0.95;
PT2U2: 0;
$P_{T3U2}$: 1;
$P_{T4U2}$: 0.2;
$P_{T5U2}$: 1;

It is to be understood that any method of trajectory prediction may be employed, such as described in the publication "The Garden of Forking Paths Towards Multi-Future Trajectory Prediction" by Junwei Liang, Lu Jiang, Kevin Murphy, Ting Yu and Alexander Hauptmann and in the ICCV paper "PIE: A Large-Scale Dataset and Models for Pedestrian Intention Estimation and Trajectory Prediction" by Amir Rasouli, Iuliia Kotseruba, Toni Kunic and John K. Tsotsos published by the Computer Vision Foundation.

In one embodiment the camera 142 and/or the controller 136 may be adapted to learn possible branching points L1, L2 and possible trajectories T1, T2, T3, T4, T5. In figures 2 and 3 the trajectories T1, T2, T3, T4, T5 have been shown as single trajectories. In practice each reference numeral T1, T2, T3, T4, T5 represents an array of trajectories and/or trajectory segments, since users tend not to use exactly the same trajectory or pass when walking in a room. This simplification has been made for the ease and convenience of understanding.

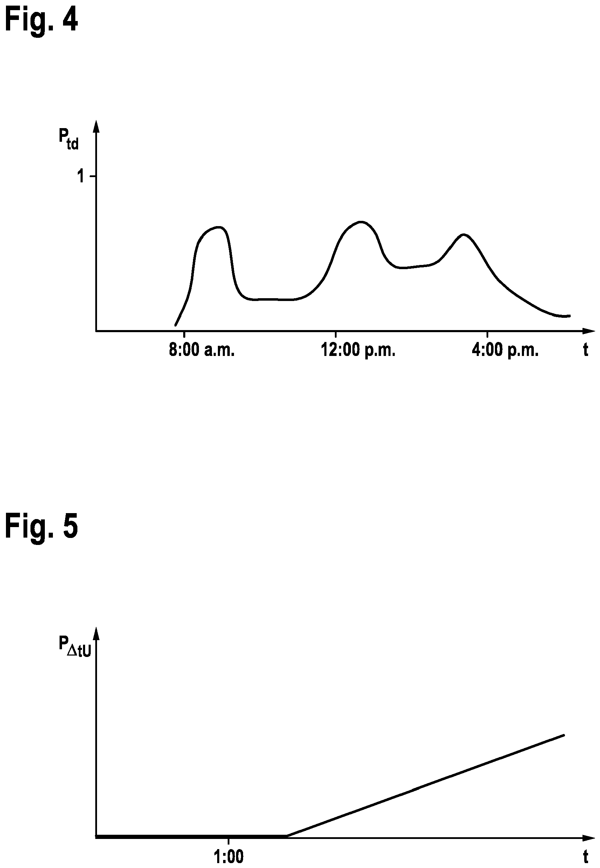

Reference is made to figure 4 showing the likelihood of beverage dispensing events depending on the time of the day. Generally, it is more likely that beverage is dispensed in the morning, at noon or in the afternoon, for example in an office environment. The likelihood may be different in a home environment and may depend on the weekday. The likelihood of water dispensing events $P_t$ may also depend on the user ($P_{tU}$).

Reference is made to figure 5 showing the likelihood of $P_{\Delta tU}$ of a water dispensing event depending on the last water dispensing event of a specific user it is more likely that a user will dispense beverage, if he did not dispense beverage for a longer period.

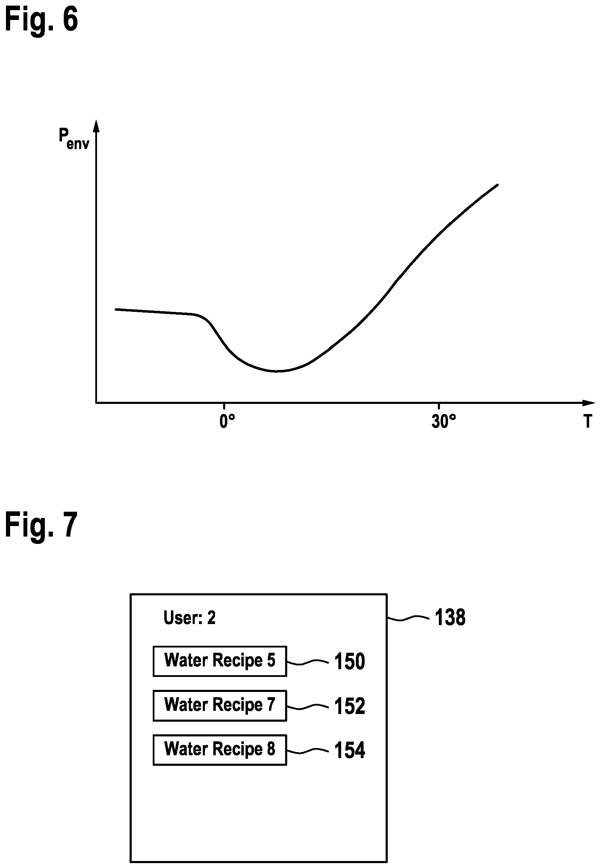

Reference is made to figure 6 showing the likelihood $P_{env}$ of a water dispensing event depending on an environment parameter, such as the outside temperature. The likelihood of a water dispensing event will be higher at very low temperatures and at high temperatures. The likelihood of a beverage dispensing event depending on the environment parameter may be learned user specific.

The controller 138 may learn the likelihood $P_{td}$ of a beverage dispensing event depending on the time of the day by machine learning and update the likelihood $P_{tdU}$ also by machine learning. The controller 136 may also learn the user specific likelihood $P_{tdU}$ of a water dispensing event depending on the time of the day by machine learning, if the user has been recognized. The controller 136 may learn the user specific likelihood $P_{\Delta tU}$ for beverage dispensing events based on the time interval passed since the last beverage dispensing event by machine learning.

The environment parameter may be passed to the controller 136 by a network, such as by a sensor connected to a network and/or by retrieving the environment parameter from a remote database.

The general likelihood $P_{BD}$ of a beverage dispensing event, which is not calculated user specific may be calculated by the following formula:

$$P_{BD} = P_T \times P_{td} \times P_{env};\ (\text{I})$$

wherein $P_{BD}$ is the general non-user specific likelihood of a beverage dispensing event;
$P_T$ is the trajectory based likelihood for a beverage dispensing event;
$P_{td}$ is the likelihood for a beverage dispensing event based on the time of the day;
$P_{env}$ is the likelihood of beverage dispensing events based on an environment parameter.

The controller 136 can estimate the user specific likelihood $P_{BDU}$ of a beverage dispensing event based on the following formula:

$$P_{BDU} = P_{TU} \times P_{tdU} \times P_{\Delta tU} \times P_{envU};\ (\text{II})$$

wherein $P_{BDU}$ is the specific likelihood of a beverage dispensing event;
$P_{TU}$ is the trajectory based user specific likelihood for a beverage dispensing event; $P_{tdU}$ is the user specific likelihood for a beverage dispensing event based on the time of the day;
$P_{\Delta tU}$ is the user specific likelihood for a beverage dispensing event based on the last dispensing event of this user;
$P_{envU}$ is the user specific likelihood of beverage dispensing events based on an environment parameter.

As soon as the general likelihood $P_{td}$ for beverage dispensers and/or the user specific likelihood $P_{tdU}$ for beverage dispensing events exceeds a predetermined threshold $P_{Thr}$, the controller 136 initiates the beverage dispenser cleaning function and/or activates at least one of the beverage preparation devices 122, 124, 126 as described above with respect to the flow-type tempering device 122.

Thereby, the period between selection of beverage by the user at the input device 138 to dispensing the beverage into the user vessel 134 is reduced.

Reference is made to figure 7 showing a plurality of water recipe 150, 152, 154 as beverages to be selected by the user. The controller 136 may select proposals for beverage 150, 152, 154 based on the person recognized. In other words, the controller 136 may propose different beverage proposals to different users. The proposed beverage may include the last beverage requested by the user, the beverage requested most often by the user, the beverage requested most likely by the user based on the time of the day, the beverage requested most likely by the user based on the season and/or the beverage requested most likely by the user based on at least one environment value. The applicant reserves the right to file a divisional application for this aspect of the invention independent of the activation of the beverage preparation device and/or activation of the beverage dispensing cleaning function.

The present invention provides the advantage that the time interval between selecting and dispensing a beverage can be reduced. Further, the time necessary for selecting a beverage can be reduced, since beverage most likely selected by the user is displayed on an input device.

## Claims

1. A method of operating a beverage dispenser, comprising the following steps:

   - detecting at least one of a person approaching the beverage dispenser and a person in the proximity of the beverage dispenser; and
   - responsive to detecting at least one of the person approaching the beverage dispenser and detecting the person in the proximity of the beverage dispenser, activating at least one of:
   - a beverage preparation device of the beverage dispenser; and
   - a beverage dispenser cleaning function for cleaning the at least one beverage preparation device.

2. The method according to claim 1, wherein the beverage preparation device comprises at least one of:

   - a beverage tempering device;
   - a beverage carbonization device;
   - a beverage mineralization device.

3. The method according to any one of claims 1 or 2, further comprising the step of

   - outputting beverage into a user vessel after the step of activating at least one of a beverage preparation device of the beverage dispenser, and a beverage dispenser cleaning function.

4. The method according to any one of claims 1 to 3 further comprising the step of:

   - activating an imaging sensor for acquiring images of the environment of the beverage dispenser.

5. The method according to claim 4, further comprising the step of

   - determining a probability by which a person approaches the beverage dispenser based on the acquired images.

6. The method according to claim 5, wherein the step of determining a probability by which the person approaches the beverage dispenser comprises at least one of the following steps:

   - estimating the intended trajectory of the person based on the elapsed actual trajectory assessed by the processing a plurality of images acquired by the image sensor;
   - comparing the elapsed actual trajectory of a person with trajectories of this person stored in a database assessed by the processing a plurality of images acquired by the image sensor.

7. The method according to claim 5 or 6, wherein the step of determining a probability that the person approaches the beverage dispenser comprises at least one of the following steps:

    - determining the likelihood, whether the user will approach the beverage dispenser at the actual time;
    - determining the likelihood, whether the user will approach the beverage dispenser based on the last time the user requested beverage.

8. The method according to any one of claims 5 to 7, wherein the step of determining a probability that the person approaches the beverage dispenser comprises:

    - determining, whether the person carries a beverage vessel, by processing the plurality of images acquired by the image sensor.

9. The method according to any one of claims 5 to 8, further comprising the following step:

    - after identifying the person by processing the plurality of images acquired by the image sensor proposing the person a beverage.

10. The method according to claim 9, wherein the proposed beverage may include at least one of the following:

    - the last beverage requested by the person;
    - the beverage requested most often by the person;
    - the beverage requested most likely by the person based on the time of day;
    - the beverage requested most likely by the person based on the season;
    - the beverage requested most likely by the person based on at least one environment value.

11. The method according to any one of claims 4 to 10, further comprising the following steps:

    - storing at least one trajectory assessed by processing a plurality of images acquired by the image sensor in a database.

12. The method according to any one of claims 4 to 11, further comprising at least one of the following steps:

    - storing in a database the actual time of a dispensing event;
    - storing in the database the actual time of a dispensing event per person.

13. The method according to any one of claims 4 to 12, further comprising at least one of the following steps:

    - storing image processing information about at least one beverage vessel in a database, wherein the image processing information is generated by analyzing at least one image acquired by the image sensor;
    - storing image processing information about at least one beverage vessel of a plurality of users in a database, wherein the image processing information is generated by analyzing at least one image acquired by the image sensor.

14. A beverage dispenser, comprising:

    - at least one beverage preparation device;
    - a person detection sensor adapted to detect at least one of an approaching person and a person in the proximity of the beverage dispenser;
    - wherein the person detection sensor is connected with the controller;
    - wherein, if the person detection sensor transmits a signal to the controller indicating at least one of a person approaching the beverage dispenser and a person in the proximity of the beverage dispenser, the controller is adapted to activate at least one of the beverage preparation device and/or a beverage dispenser cleaning function.

15. The beverage dispenser according to claim 14, further comprising

    - a valve connected downstream of the at least one beverage preparation device, wherein the valve is adapted to pass a liquid from the at least one beverage preparation device in a first operation mode to a nozzle for outputting the beverage to a user vessel and to pass the liquid from the at least one beverage preparation device in a second operation mode to a drain.

# Fig. 1

138  136  140  142  100

102 104 105  106 108  122 124 126 128 130 132

107  129  134

## Fig. 2

200

138
140

100

142

132

210
T5
206

T4
L2

T2

212
T3
208

L1

214

T1

## Fig. 3

200

140

138
100

142

132

210
T5
206

T4
L2

T2

212
T3
212

L1

214
134

T1

# Fig. 4

# Fig. 5

# Fig. 6

# Fig. 7

Europäisches
Patentamt

European
Patent Office

Office européen
des brevets

# EUROPEAN SEARCH REPORT

Application Number

EP 20 15 8978

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/156337 A1 (STUDOR CHARLES F [US] ET AL) 21 June 2012 (2012-06-21) | 1-4,12, 14,15 | INV. A47J31/52 A47J31/44 |
| Y | * paragraphs [0049], [0118], [0129], | 13 | |
| A | [0144] - [0146], [0223]; figures 1,28 * | 5-11 | |
| Y | WO 2014/169447 A1 (NESTEC SA [CH]; DENG TING [CN]; HU RUGUO [CN]) 23 October 2014 (2014-10-23) * page 14, line 11 - page 16, line 19; figure 1 * | 13 | |
| X | WO 2016/162361 A1 (SCHAERER AG [CH]) 13 October 2016 (2016-10-13) * page 7, line 6 - page 12, line 5; figures * | 1-4,14, 15 | |
| X | DE 10 2010 008270 A1 (SEVERIN ELEKTROGERAETE GMBH [DE]) 5 August 2010 (2010-08-05) * paragraphs [0012], [0013]; figure * | 1-3,14, 15 | |
| A | EP 3 505 021 A1 (BSH HAUSGERAETE GMBH [DE]) 3 July 2019 (2019-07-03) * paragraphs [0022] - [0034]; figure * | 13 | TECHNICAL FIELDS SEARCHED (IPC) A47J |
| A | DE 10 2018 113403 A1 (MIELE & CIE [DE]) 12 December 2019 (2019-12-12) * paragraphs [0029] - [0034]; figures * | 13 | |

The present search report has been drawn up for all claims

| Place of search | Date of completion of the search | Examiner |
|---|---|---|
| Munich | 21 July 2020 | De Terlizzi, Marino |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 868 264 A1**

## ANNEX TO THE EUROPEAN SEARCH REPORT
## ON EUROPEAN PATENT APPLICATION NO.

EP 20 15 8978

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2020

| Patent document cited in search report | Publication date | Patent family member(s) | Publication date |
|---|---|---|---|
| US 2012156337    A1 | 21-06-2012 | CN      103596473  A | 19-02-2014 |
| | | CN      107369254  A | 21-11-2017 |
| | | EP       2651270  A2 | 23-10-2013 |
| | | EP       3175744  A1 | 07-06-2017 |
| | | JP       6672135  B2 | 25-03-2020 |
| | | JP     2014502751  A | 03-02-2014 |
| | | JP     2017123165  A | 13-07-2017 |
| | | JP     2019069159  A | 09-05-2019 |
| | | KR    20140020848  A | 19-02-2014 |
| | | KR    20180054921  A | 24-05-2018 |
| | | US     2012156337  A1 | 21-06-2012 |
| | | US     2012156339  A1 | 21-06-2012 |
| | | US     2012156343  A1 | 21-06-2012 |
| | | US     2012156344  A1 | 21-06-2012 |
| | | US     2015164264  A1 | 18-06-2015 |
| | | US     2017215631  A1 | 03-08-2017 |
| | | WO     2012083194  A2 | 21-06-2012 |
| WO 2014169447    A1 | 23-10-2014 | CN      105228943  A | 06-01-2016 |
| | | EP       2986552  A1 | 24-02-2016 |
| | | US     2017135519  A1 | 18-05-2017 |
| | | WO     2014169447  A1 | 23-10-2014 |
| WO 2016162361    A1 | 13-10-2016 | CH       710942  A1 | 14-10-2016 |
| | | EP       3280303  A1 | 14-02-2018 |
| | | WO     2016162361  A1 | 13-10-2016 |
| DE 102010008270 A1 | 05-08-2010 | DE 102010008270  A1 | 05-08-2010 |
| | | WO     2011100944  A1 | 25-08-2011 |
| EP 3505021       A1 | 03-07-2019 | DE 102017223894  A1 | 04-07-2019 |
| | | EP       3505021  A1 | 03-07-2019 |
| DE 102018113403 A1 | 12-12-2019 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 202010006679 U1
- WO 9406547 A1
- US 5443739 A
- EP 18207971

**Non-patent literature cited in the description**

- **JUNWEI LIANG ; LU JIANG ; KEVIN MURPHY ; TING YU ; ALEXANDER HAUPTMANN.** *The Garden of Forking Paths: Towards Multi-Future Trajectory Prediction*
- **AMIR RASOULI ; LULIIA KOTSERUBA ; TONI KUNIC ; JOHN K. TSOTSOS.** PIE: A Large-Scale Dataset and Models for Pedestrian Intention Estimation and Trajectory Prediction. the Computer Vision Foundation
- **JUNWEI LIANG ; LU JIANG ; KEVIN MURPHY ; TING YU ; ALEXANDER HAUPTMANN.** *The Garden of Forking Paths Towards Multi-Future Trajectory Prediction*